# EUROPÄISCHE PATENTSCHRIFT

(11) **EP 1 845 888 B1**
(45) Veröffentlichungstag und Bekanntmachung des Hinweises auf die Patenterteilung: **08.12.2010**
(21) Anmeldenummer: 06707765.1
(22) Anmeldetag: 19.01.2006
(51) Int. Cl.: A61C 19/00

(54) **ANMISCHVORRICHTUNG**
MIXING DEVICE
DISPOSITIF MELANGEUR

(30) Priorität: 25.01.2005 DE 202005001337 U
(43) Veröffentlichungstag der Anmeldung: 24.10.2007
(73) Patentinhaber: Mehrhof Implant Technologies GmbH, 10553 Berlin (DE)
(72) Erfinder: Mehrhof, Jürgen, 14129 Berlin (DE)
(74) Vertreter: Müller, Frank Peter
(86) Internationale Anmeldenummer: PCT/EP2006/050316
(87) Internationale Veröffentlichungsnummer: WO 2006/079603

(56) Entgegenhaltungen:
- DE-U1- 20 105 307
- US-A- 3 885 843
- US-A- 4 180 159
- US-A- 4 948 368

## Beschreibung

Die Erfindung betrifft eine Anmischvorrichtung das Anmischen von feucht zu haltenden Komponenten eines Werkstoffs, insbesondere einer Dentalkeramik. Die Anmischvorrichtung umfasst eine Anmischunterlage, auf der die Komponenten angemischt werden können. Befeuchtungsmittel und ein Flüssigkeitsreservoir sorgen dafür, dass die Komponenten feucht gehalten werden.

Im speziellen Fall ist der Werkstoff, dessen Komponenten anzumischen sind, eine Dentalkeramik. Die Komponenten sind dann Keramikmassen und Keramikmassenflüssigkeit. Noch vor wenigen Jahren wurden Keramikmassen (Keramikpulver) mit einer bestimmten Keramikmassenflüssigkeit (meist einer glyzerinbasierten Flüssigkeit, im folgenden auch Anmischflüssigkeit genannt) auf einer Glasplatte angemischt.

### Dabei ergibt sich das folgende Problem:

Beim Vorgang des keramischen Schichtens, also dem Aufbau der zahnfarbenen Struktur einer Keramikkrone verdunstet stets Flüssigkeit. So muss häufig, während des oft mehrstündigen Schichtprozesses, eine gewisse weitere Menge einer anderen Flüssigkeit nachgegeben werden, um die angemischte Keramikmasse bei der gewünschten Konsistenz zu halten. Hierzu wird meist destilliertes Wasser eingesetzt, um die Konzentration weniger flüchtiger Zusätze aus den speziellen Anmischflüssigkeiten gering zu halten.

Von Seiten der Hersteller werden zum Anmischen von Keramikmassen keine bestimmten Mischungsverhältnisse vorgegeben.

Die angemischte Keramikmasse hat keine gleich bleibende Konsistenz. Sie dickt zunehmend ein und kann in Schichtpausen komplett eintrocknen. Um Inhomogenitäten zu vermeiden müssen eingetrocknete Keramikmassen entsorgt und durch neue ersetzt werden.

Um diese Probleme zu kompensieren wurden Feuchthaltesysteme entwickelt, die nun bereits seit einigen Jahren am Dentalmarkt etabliert sind.

### Die meisten Systeme sind wie folgt aufgebaut:

Eine ca. 4 bis 8 mm starke und feuchtigkeitsdurchlässige Trägerplatte liegt in einer Schale, die als Wasserreservoir dient. Die Trägerplatte besteht je nach System aus Kunststoff Zellstoff oder Keramikwaben. Zwischen Trägerplatte und der Keramikmasse bildet eine dünne Membrane eine feuchtigkeitsdurchlässige Zwischenschicht. Keramikmasse soll so bei einer gleichmäßigen Konsistenz gehalten werden.

Bei anderen Systemen wird das Keramikpulver direkt auf eine feuchtigkeitsdurchlässige Trägerplatte aus Keramik gegeben. Hier gibt es verschiedene Ausführungen. Manche haben ebenmäßig gestaltete Plattenoberfläche, wieder andere sind mit Mulden versehen, die somit eine festgelegte Einteilung vorgeben.

Ein Nachteil dieser Systeme besteht darin, dass trockene Keramikpulver, die auf eine bereits feuchte Membran aufgebracht werden, sofort die Flüssigkeit aus dem Reservoir aufnehmen. Die sofortige Flüssigkeitsaufnahme ist jedoch unerwünscht, da das Keramikpulver nun zum größten Teil durchfeuchtet wird, noch bevor die speziell dafür vorgesehene Anmischflüssigkeit aufgenommen werden kann.

Zudem können Keramikmassen nur bei gleichmäßiger Konsistenz gehalten werden, wenn ein Wasserreservoir ausreichend zur Verfügung steht. Systembedingt kann die Trägerplatte nur so lange die Feuchtigkeit zur Keramikmasse transportieren, wie sie direkten Kontakt zum Wasserspeicher hat. Das Reservoir ist bei den bekannten Systemen direkt unterhalb der Trägerplatte vorgesehen und somit sehr klein. Sinkt der Flüssigkeitsstand so weit ab, dass dieser keinen Kontakt mehr zur Trägerplatte hat, zieht diese die Flüssigkeit aus der darüber befindlichen Keramikmassenmischung wieder heraus. Die Keramikmasse ist nun für die Verarbeitung zu fest und muss nach erneutem Auffüllen des Wasserreservoirs wieder ausgiebig durchgespatelt werden.

Beispiel: Bei achtstündiger Verarbeitungszeit von ca. 15 Gramm Keramikmasse muss das Procedere des Nachwässems und Durchspatelns bis zu vier Mal wiederholt werden.

Außerdem sind die laufenden Kosten sehr hoch, da wegen drohenden Pilzbefalls die ohnehin teuren Membrane bei einigen Systemen bereits nach einer Woche ausgetauscht werden müssen.

Aus den US 4,948,368, US 4,180,159 (auf der die zweiteilige form und des Anspruchs 1 basiert) und US 3,885,843 sind Vorrichtungen zum Befeuchten von Werkstoffmischungen bekannt, in denen eine Befeuchtung solcher Mischungen mittels saugfähigen Materials mit Dochtwirkung vorgenommen wird.

Der Erfindung liegt daher die Aufgabe zugrunde, eine Anmischvorrichtung nach Anspruch 1 zu schaffen, die die Nachteile des Standes der Technik weitestgehend vermeidet.

Erfindungsgemäß wir diese Aufgabe durch eine Anmischvorrichtung der eingangs genannten Art gelöst, bei der die Befeuchtungsmittel einen langgestreckten Flüssigkeitsträger umfassen, der einen Flüssigkeitstransport in dessen Längsrichtung bewirkt und eine Flüssigkeitsabgabe an feucht zu haltende Komponenten über die Oberfläche des Flüssigkeitsträgers quer zu dessen Längsrichtung erlaubt und der einerseits mit dem Flüssigkeitsreservoir in Verbindung steht und andrerseits an eine Anmischfläche auf der Anmischunterlage angrenzt.

Die Erfindung beruht auf dem Einsatz einer neuen Technik zum Flüssigkeitstransport.

Vorzugsweise ist der Flüssigkeitsträger eine Schnur oder ein Seil aus einer Vielzahl von Kunst- und/oder Naturfaserfilamenten, welche wenigstens mit einem Abschnitt in das Flüssigkeitsreservoir eintaucht.

Es hat sich herausgestellt, dass mit einer derartigen Anmischvorrichtung Komponenten eines Keramikwerkstoffs über viele Stunden und sogar Tage gleichmäßig feucht gehalten werden können.

Es hat sich herausgestellt, dass ein besonders gleichmäßiger und zuverlässiger Flüssigkeitstransport möglich ist, wenn die Schnur gespannt ist. oder Die Schnur kann alternativ zum Spannen oder zusätzlich einen festen Kern aus Draht oder Kunststoff besitzen, der eine statische Trägerfunktion übernimmt.

Anstelle eine Schnur kann ein auch Stab als langgestreckter Flüssigkeitsträger dienen. Ein solcher Stab besitzt Kapillaren oder miteinander verbundene Poren, die dem Flüssigkeitstransport in Längsrichtung dienen und sich zur Oberfläche das Stabes hin derart öffnen, dass eine Flüssigkeitsabgabe möglich ist. Ein solcher Stab kann, über die Anmischunterlage gelegt, die gleiche Wirkung haben wie eine Schnur. Der Stab ragt beispielsweise mit einem abgewinkelten Ende in das Flüssigkeitsreservoir.

Um möglichst viele Anmischflächen oder eine möglichst große Anmischfläche auf einer entsprechend großen Anmischunterlage zu ermöglichen, sind vorzugsweise mehrere Flüssigkeitsträger in Form mehrerer über die Anmischunterlage gespannter Schnüre oder Stäbe vorgesehen.

Diese Schnüre oder Stäbe verlaufen vorzugsweise parallel zueinander.

Besonders vorteilhaft ist es, wenn die Schnüre über einen Spannrahmen gespannt sind, der relativ zur Anmischunterlage beweglich angeordnet ist. Dann können die Schnüre durch wegnehmen oder wegklappen des Spannrahmens von der Anmischunterlage entfernt werden, so dass ein ungehindertes Anmischen der Keramikmassen möglich wird.

Stäbe als Flüssigkeitsträger wären auf einen entsprechenden Rahmen aufzulegen.

Um den Spannrahmen samt Schnüren leicht von der Anmischunterlage entfernen zu können, kann der Spannrahmen derart um eine Schwenkachse schwenkbar befestigt sein, dass die Schnüre in einer ersten Schwenkposition des Spannrahmens auf der Anmischunterlage aufliegen und durch Schwenken des Spannrahmens in eine zweite Position von der Anmischunterlage wegzuklappen sind. In diesem Fall ist es besonders vorteilhaft wenn der Spannrahmen mit den daran befestigten Schnüren derart angeordnet und geformt ist, dass der Spannrahmen und ein jeweiliger Abschnitt der an dem Spannrahmen befestigten Schnüre in der ersten Schwenkposition teilweise in das Flüssigkeitsreservoir eintaucht. Damit wird sichergestellt, dass die Schnüre als Flüssigkeitsträger immer automatisch mit dem Flüssigkeitsreservoir in Verbindung gebracht werden, wenn der Spannrahmen in seine erste Schwenkposition geschwenkt wird, in der die Schnüre an die feuchtzuhaltenden Keramikmassen angrenzen, um diese feucht zu halten.

Wenn die Schnüre parallel zur Schwenkachse gespannt sind und der Spannrahmen um eine einem Benutzer abgewandte Schwenkachse zu schwenken ist, ist der Schwenkrahmen dem Benutzer im weggeschwenkten Zustand nicht im Wege. Umgekehrt (in der ersten Schwenkposition) bilden die Schnüre in sinnvoller Weise "Linien" auf der Anmischunterlage, die zur Orientierung dienen können.

Als geeignete Werkstoffe für die Schnüre haben sich Polyamidfaserfilamente oder Polypropylen als Kunstfaserfilamente und Zellstoff als Bestandteil der Naturfaserfilamente erwiesen.

Die Anmischunterlage ist vorzugsweise von einer Anmischplatte mit einer glatten, ebenen, geschlossenen Anmischoberfläche gebildet. Besonders geeignet ist eine Glasplatte.

Prinzipiell wird Keramikmasse im angemischten Zustand mit einem speziellen Pinsel aufgenommen. Der Prozess des Aufnehmens funktioniert bekannter Membranen heute üblicher Feuchthaltesysteme bedingt durch deren rauere Oberfläche schlecht. Da die Oberfläche von Glasplatten wesentlich glatter ist als die bekannter Membranen, erlaubt eine derartige Anmischunterlage in Form einer Glasplatte eine leichte und effiziente Aufnahme von Komponenten.

Außerdem erlaubt es eine Anmischplatte in Form einer durchsichtigen Glasplatte, dass ein Untersatz für die Glasplatte durch die Glasplatte hindurch sichtbare Markierungen trägt, die den Verlauf der Schnüre angeben, so dass der Verlauf der Schnüre auch dann zu erkennen ist, wenn der Spannrahmen mit den Schnüren von der Glasplatte entfernt, also z.B. weggeklappt ist.

Die Vorteile der Erfindung spiegeln sich in der folgenden Beschreibung eines typischen Arbeitsablaufs wieder:

Die Keramikmassen werden auf einer Glasplatte angemischt, die sich wie bereits erwähnt, zur Aufnahme mit dem Pinsel am besten eignet. Dazu wird der Spannrahmen entfernt oder weggeschwenkt.

Als Hilfsmittel zur Positionierung der Massen steht unterhalb der transparenten Glasplatte eine durch Markierungen gekennzeichnete Rastereinteilung zur Verfügung.

Da die Keramikmasse beim Aufbringen auf die Glasplatte nicht sofort durchtränkt wird, kann sie ohne Zeitdruck mit der vom Hersteller speziell dafür vorgesehenen Flüssigkeit angemischt werden.

Nun wird der Spannrahmen auf die Glasplatte abgesenkt. Auf den Spannrahmen sind die zum Flüssigkeitstransport vorgesehene Schnüre aufgespannt.

Die Schnüre sind quer über die gesamte Breite der Glasplatte gespannt. Sie verbinden die einzelnen, bereits vorgemischten Keramikmasseninseln, an deren jeweils oberen Begrenzung mit der Flüssigkeit aus dem großen Flüssigkeitsreservoir. Dieses ist nun mit einem Fassungsvermögen von 220ml bis zu zehn mal größer als bei bekannten Membransystemen. Die Flüssigkeit steht hierbei bis zum letzten Tropfen zur Verfügung, da die Schnüre in einer bevorzugten Ausführungsvariante bis ganz zum Boden des Flüssigkeitsreservoirs reichen.

Die Keramikmasse behält nun über viele Tage hinweg genau die gewünschte Konsistenz.

Die Schnüre sind wesentlich kostengünstiger als Membrane.

Die Anmischplatteneinheit mit Flüssigkeitsreservoir kann in Schichtpausen zum Schutz vor Verunreinigungen in eine Art Garage (Abdeckung) geschoben werden. Zum sicheren Transport verbindet ein Schienensystem die beiden Einzelelemente im eingeschobenen Zustand. Die eigenständige Abdeckung dient des weiteren zur Aufnahme des Pinselspülbeckens, des Abstreifschwämmchens, eines Instrumententrägers und bietet Platz für einige Brenngutträger.

Die Erfindung soll nun anhand es in den Figuren abgebildeten Ausführungsbeispiels näher erläutert werden.

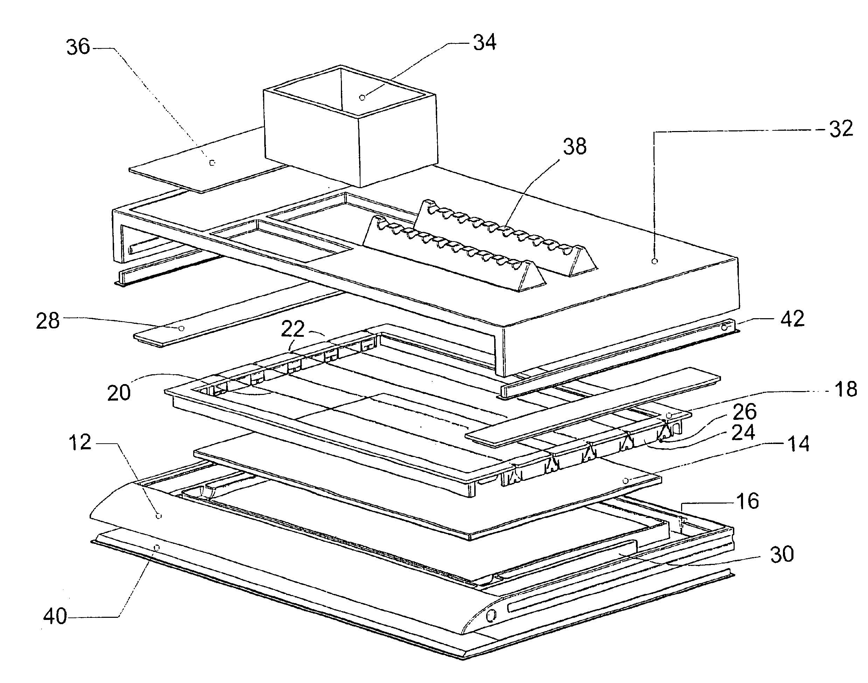

In der Figur ist eine Anmischvorrichtung 10 in Form einer Explosionszeichnung dargestellt. Wesentliche Elemente der Anmischvorrichtung 10 sind ein Untersatz 12 in Form eines Basiselementes, auf den eine Glasplatte 14 als Anmischplatte aufgelegt ist, die auf ihrer Oberseite eine geschlossene, glatte Oberfläche besitzt. In den Untersatz 12 ist ein Flüssigkeits- oder Wasserreservoir 16 in Form einer Vertiefung eingearbeitet, die die Glasplatte 14 auf drei Seiten umgibt. Ein Spannrahmen 18 trägt insgesamt sechs parallel zueinander gespannte Schnüre 20, die durch Kerben 22 am Spannrahmen örtlich positioniert sind. Der Spannrahmen 18 besitzt einen Befestigungssteg 24, der bei aufgelegtem Spannrahmen 18 in das Flüssigkeitsreservoir 16 ragt. Der Befestigungssteg 24 besitzt Schlitze 26, die sich mit zunehmender Tiefe verjüngen und der Befestigung der Schnüre 20 dienen. Die am Befestigungssteg 24 befestigten Enden der Schnüre 20 ragen somit bei befülltem Flüssigkeitsreservoir 16 in die entsprechende Flüssigkeit, beispielsweise Wasser.

Dies sind soweit die wesentlichen Bestandteile der Anmischvorrichtung 10, die bereits die erfindungsgemäße Wirkung hervorrufen.

Das Wasserreservoir 16 lässt sich mit Hilfe von beidseits der Glasplatte 14 aufzulegenden Abdeckungen 28 abdecken. Eine Kante 30 im jeweiligen Wasserreservoir bewirkt, dass ein Druck auf einen hinteren Abschnitt einer jeweiligen Abdeckung 28 dazu führt, dass die Abdeckung 28 sich im vorderen Bereich anhebt und leicht entfernt werden kann, um beispielsweise das Flüssigkeitsreservoir 16 aufzufüllen.

Ergänzende Bestandteile der Anmischvorrichtung 10 sind ein Schutzkasten 32, auch Garage genannt, mit einem darauf angeordneten Spülbecken 34 und einer Ablegeplatte 36 aus Metall. Der Schutzkasten 32 besitzt auf seiner Oberseite außerdem noch mit Vertiefungen versehene Ablegestege 38, auf der Pinsel, Spatel oder ähnliches abgelegt werden können.

Der Schutzkasten 32 ist so ausgebildet, dass der Untersatz 12 samt Glasplatte 14 und Spannrahmen 28 unter den Schutzkasten 32 zu schieben und auf diese Weise geschützt ist. Dies wird durch Gleitfüße 40 auf der Unterseite des Untersatzes 12 erleichtert. Der Schutzkasten 32 besitzt haftende Silikonfüße 42, die weniger gleitfähig sind als die Gleitfüße 40, sodass der Schutzkasten 32 etwas weniger leicht zu verschieben ist, als der Untersatz 12.

Der Untersatz 12 sowie der Schutzkasten 32 können aus spritzgegossenem oder tiefgezogenem Kunststoff bestehen. Der Spannrahmen 18 kann ebenfalls aus spritzgegossenem Kunststoff bestehen.

In der Figur nicht abgebildet sind Markierungen auf dem Untersatz 12 unterhalb der Glasplatte 14, die den Verlauf der Schnüre 20 andeuten, sodass dieser Verlauf auch dann bekannt ist, wenn der Spannrahmen 18 vom übrigen Untersatz 12 und der Glasplatte 14 abgenommen ist.

## Patentansprüche

1. Anmischvorrichtung mit einer Anmischunterlage (14), auf der feucht zu haltende Komponenten eines Werkstoffs, insbesondere eines Dentalkeramikwerkstofss, anzumischen sind, sowie mit einem Flüsslgkeitsreservoir (16) und mit Befeuchtungsmitteln (20), die mit dem Flüssigkeitsreservoir (16) in Verbindung stehen und angeordnet sowie ausgebildet sind, feucht zu haltende Komponenten feucht zu halten,
wobei die Befeuchtungsmittel (20) einen lang gestreckten Flüssigkeitsträger umfassen, der einen Flüselgkeitstrensport in dessen Längsrichtung bewirkt und eine Flüssigkeitsabgabe an feucht zu haltende Komponenten über seine Oberfläche quer zu der Längsrichtung erlaubt und der einerseits mit dem Flüsslgkeitsreservoir (16) In Verbindung steht und andererseits an eine Anmischfläche auf der Anmischunterlage (14) angrenzt,
wobei der Flüssigkeitsträger (20) eine Schnur aus einer Vielzahl von Kunst- und/oder Naturfaserfilamenten ist, welche wenigstens mit einem kurzen Teilabschnitt In das Flüsslgkeltsreservoir (16) eintaucht,
**dadurch gekennzeichnet, dass** die Schnur (20) gespannt ist und dass mehrere Flüssigkeitsträger (20) in Form mehrerer über die Anmtschunterlage (14) gespannter Schnüre vorgesehen sind.

2. Anmlschvorrichtung nach Anspruch 1, **dadurch gekennzeichnet, dass** die Schnüre (20) parallel zueinander verlaufen.

3. Anmischvorrichtung nach Anspruch 1, **dadurch gekennzeichnet, dass** die Schnüre (20) über einen Spannrahmen (18) gespannt sind, der relativ zur Anmlschunterlage (14) beweglich angeordnet ist.

4. Anmischvorrichtung nach Anspruch 3, **dadurch gekennzeichnet, dass** der Spannrahmen (18) derart um eine Schwenkachse schwenkbar befestigt ist, dass die Schnüre (20) In einer ersten Schwenkposition des Spannrahmens (18) auf der Anmischunterlage (14) aufliegen und durch Schwenken des Spannrahmens (18) In eine zweite Position von der Anmischunterlage (14) wegzuklappen sind.

5. Anmlschvorrichtung nach Anspruch 4, **dadurch gekennzeichnet, dass** der Spannrahmen (18) mit den daran befestigten Schnüren (20) derart angeordnet und geformt ist, dass der Spannrahmen (18) und ein jewelliger Abschnitt der an dem Spannrahmen (18) befestigten Schnüre (20) in der ersten Schwenkposition teilweise in das Flüssigkeitsreservoir (16) eintaucht.

6. Anmischvorrichtung nach Anspruch 4, **dadurch gekennzeichnet, dass** die Schnüre (20) parallel zur Schwenkachse gespannt sind.

7. Anmischvorrichtung nach Anspruch 1, **dadurch gekennzeichnet, dass** die Kunstfaserfilamente Polyamidfaserfilament sind.

8. Anmischvorrichtung nach Anspruch 1, **dadurch gekennzeichnet, dass** die Naturfaserfilamente Zellstoff enthalten.

9. Anmischvorrichtung nach Anspruch 1, **dadurch gekennzeichnet, dass** die Anmlschunterlage (14) von einer Anmischplatte mit einer glatten, ebenen, geschlossenen Anmlschoberfläche gebildet ist.

10. Anmischverrichtung nach Anspruch 9, **dadurch gekennzeichnet, dass** die Anmischplatte (14) eine Glasplatte ist.

11. Anmischvorrichtung nach Anspruch 9, **dadurch gekennzeichnet, dass** der oder die Flüssigkeitsträger (20) über die Anmischplatte (14) gespannt ist oder sind.

12. Anmischvorrichtung nach Anspruch 10, **dadurch gekennzeichnet, dass** der oder die Flüssigkeitsträger (20) auf der Anmischplatte (14) aufliegt oder aufliegen.

13. Anmischvorrichtung nach Anspruch 9, **gekennzeichnet durch** einen Untersatz (12), der die Anmischplatte (14) trägt und in den seitlich neben der Anmischplatte (14) ein Flüssigkeitsreservoir (16) derart eingeformt ist, dass ein Flüssigkeitspegel unterhalb der Anmischoberfläche möglich ist.

14. Anmischvorrichtung nach Anspruch 13, **dadurch gekennzeichnet, dass** zu beiden Selten der Anmischplatte (14) jeweils ein Flüssigkeitsreservoir (16) eingeformt ist.

15. Anmischvorrichtung nach Anspruch 4 und 14, **dadurch gekennzeichnet, dass** die Anmischplatte (14) rechteckig ist und die Flüssigkeitsreservoire (16) entlang zweier gegenüberliegender Längsseiten der Anmischplatte (14) angeordnet sind, während die Schwenkachse entlang einer dritten, von den beiden gegenüberliegenden Seiten der Anmischplatte (14) eingeschlossen Seite der Anmischplatte (14) verläuft.

16. Anmischvorrichtung nach Anspruch 13, **dadurch gekennzeichnet, dass** die Anmischplatte (14) eine durchsichtige Glasplatte oder ein transparentes Material mit geschlossener glatter Oberfläche ist und dass der Untersatz (12) durch die Glasplatte hindurch sichtbare Markierungen trägt, die den Verlauf der Schnüre (20) angeben.

## Claims

1. Mixing device with a mixing base (14) on which components of a material, in particular a dental ceramic material, which are to be kept moist, are to be mixed, and with a liquid reservoir (16) and moistening means (20) which communicate with the liquid reservoir (16) and which are arranged and adapted to keep moist components which are to be kept moist,
wherein the moistening means (20) comprise a liquid carrier of an elongate configuration which provides for liquid transport in the longitudinal direction thereof and allows liquid delivery to components which are to be kept moist over the surface of the liquid carrier transverse to the longitudinal direction and which are on the one hand in communication with the liquid reservoir (16) and which on the other hand adjoins a mixing surface on the mixing base (14),
wherein the liquid carrier (20) is a cord comprising a plurality of artificial and/or natural fiber filaments, which dips at least with a short portion into the liquid reservoir (16),
**characterized in that** the cord (20) is taut and that there are provided a plurality of liquid carriers (20) in the form of a plurality of cords which are stretched over the mixing base (14).

2. Mixing device according to claim 1, **characterized in that** the cords (20) extend in mutually parallel relationship.

3. Mixing device according to claim 1, **characterized in that** the cords (20) are tensioned by way of a tensioning frame (18) which is arranged movably relative to the mixing base (14).

4. Mixing device according to claim 3, **characterized in that** the tensioning frame (18) is fixed pivotably about a pivot axis in such a way that in a first pivotal position of the tensioning frame (18) the cords (20) rest on the mixing base (14) and are to be pivoted away from the mixing base (14) by pivotal movement of the tensioning frame (18) into a second position.

5. Mixing device according to claim 4, **characterized in that** the tensioning frame (18) with the cords (20) fixed thereto is arranged and formed in such a way that the tensioning frame (18) and a respective portion of each of the cords (20) which are fixed to the tensioning frame (18) partially dips into the liquid reservoir (16) in the first pivotal position.

6. Mixing device according to claim 4, **characterized in that** the cords (20) are tensioned in parallel relationship with the pivot axis.

7. Mixing device according to claim 1, **characterized in that** the synthetic fiber filaments are polyamide fiber filaments.

8. Mixing device according to claim 1, **characterized in that** the natural fiber filaments contain cellulose.

9. Mixing device according to claim 1, **characterized in that** the mixing base (14) is formed by a mixing plate having a smooth, flat, closed mixing surface.

10. Mixing device according to claim 9, **characterized in that** the mixing plate (14) is a glass plate.

11. Mixing device according to claim 9, **characterized in that** the liquid carrier(s) (20) is (are) tensioned over the mixing plate (14).

12. Mixing device according to claim 10, **characterized in that** the liquid carrier(s) (20) rest(s) on the the mixing plate (14).

13. Mixing device according to claim 9, **characterized by** an underneath support (12) which carries the mixing plate (14) and in which the liquid reservoir (16) is formed laterally beside the mixing plate (14) in such a way that a level of liquid below the mixing surface is possible.

14. Mixing device according to claim 13, **characterized in that** a liquid reservoir (16) is formed at each of the two sides of the mixing plate (14).

15. Mixing device according to claims 4 and 14, **characterized in that** the mixing plate (14) is rectangular and the liquid reservoirs (16) are arranged along two oppositely disposed longitudinal sides of the mixing plate (14) while the pivot axis extends along a third side of the mixing plate (14), which is enclosed by the two oppositely disposed sides of the mixing plate (14).

16. Mixing device according to claim 13, **characterized in that** the mixing plate (14) is a transparent glass plate or a transparent material with a closed smooth surface and the underneath support (12) carries markings which are visible through the glass plate and which identify the lines of the cords (20).

## Revendications

1. Dispositif de mélange comprenant un support de mélange (14), sur lequel il s'agit de mélanger des composants, à maintenir humides, d'un matériau, en particulier d'un matériau céramique dentaire, et comprenant un réservoir de liquide (16) et des moyens d'humectation (20), qui sont en liaison avec le réservoir de liquide (16) et qui sont agencés et réalisés pour maintenir humides les composants à maintenir humides,
dans lequel les moyens d'humectation (20) comprennent un porte-liquide étiré en longueur, qui a pour effet un transport de liquide dans sa direction longitudinale et permet une fourniture de liquide à des composants à maintenir humides sur sa surface et transversalement à la direction longitudinale, et qui est d'une part en liaison avec le réservoir de liquide (16) et est d'autre part adjacent à une surface de mélange sur le support de mélange (14),
dans lequel le porte-liquide (20) est un cordon formé d'une pluralité de filaments en fibres artificielles et/ou naturelles, qui plonge par au moins un tronçon partiel court dans le réservoir de liquide (16),
**caractérisé en ce que** le cordon (20) est tendu et **en ce qu'**il est prévu plusieurs porte-liquide (20) sous la forme de plusieurs cordons tendus au-dessus du support de mélange (14).

2. Dispositif de mélange selon la revendication 1, **caractérisé en ce que** les cordons (20) s'étendent parallèlement les uns aux autres.

3. Dispositif de mélange selon la revendication 1, **caractérisé en ce que** les cordons (20) sont tendus sur un cadre de tensionnement (18), qui est agencé déplaçable par rapport au support de mélange (14).

4. Dispositif de mélange selon la revendication 3, **caractérisé en ce que** le cadre de tensionnement (18) est fixé en pivotement autour d'un axe de pivotement, de telle façon que les cordons (20) reposent sur le support de mélange (14) dans une première position pivotée du cadre de tensionnement (18), et peuvent être rabattus, par pivotement du cadre de tensionnement (18) jusque dans une seconde position en éloignement du support de mélange (14).

5. Dispositif de mélange selon la revendication 4, **caractérisé en ce que** le cadre de tensionnement (18), avec les cordons (20) fixés sur lui-même, est agencé et conformé de telle façon que le cadre de tensionnement (18) et un tronçon respectif des cordons (20) fixés sur le cadre de tensionnement (18) plongent partiellement dans le réservoir de liquide (16) dans la première position de pivotement.

6. Dispositif de mélange selon la revendication 4, **caractérisé en ce que** les cordons (20) sont tendus parallèlement à l'axe de pivotement.

7. Dispositif de mélange selon la revendication 1, **caractérisé en ce** les filaments de fibres synthétiques sont des filaments de fibres de polyamide.

8. Dispositif de mélange selon la revendication 1, **caractérisé en ce que** les filaments de fibres naturelles contiennent de la cellulose.

9. Dispositif de mélange selon la revendication 1, **caractérisé en ce que** le support de mélange (14) est formé par une plaque de mélange avec une surface de mélange fermée et lisse.

10. Dispositif de mélange selon la revendication 9, **caractérisé en ce que** la plaque de mélange (14) est une plaque de verre.

11. Dispositif de mélange selon la revendication 9, **caractérisé en ce que** le ou les porte-liquide (20) est/sont tendu(s) via la plaque de mélange (14).

12. Dispositif de mélange selon la revendication 10, **caractérisé en ce que** les porte-liquide (20) reposent sur la plaque de mélange (14).

13. Dispositif de mélange selon la revendication 9, **caractérisé par** une sous-structure (12), qui porte la plaque de mélange (14), et dans lequel est conformé un réservoir de liquide (16), latéralement à côté de la plaque de mélange (14), de telle façon qu'il est possible d'obtenir un niveau de liquide au dessous de la surface de mélange.

14. Dispositif de mélange selon la revendication 13, **caractérisé en ce qu'**un réservoir de liquide (16) respectif est conformé sur les deux côtés de la plaque de mélange (14).

15. Dispositif de mélange selon la revendication 4 et 14, **caractérisé en ce que** la plaque de mélange (14) est rectangulaire, et les réservoirs de liquide (16) sont agencés le long de deux côtés longitudinaux opposés de la plaque de mélange (14), alors que l'axe de pivotement s'étend le long d'un troisième côté de la plaque de mélange (14), lequel est enfermé par les deux côtés opposés de la plaque de mélange (14).

16. Dispositif de mélange selon la revendication 13, **caractérisé en ce que** la plaque de mélange (14) est une plaque en verre transparente ou un matériau transparent avec une surface lisse fermée, et **en ce que** la sous-structure (12) porte des marques visibles à travers la plaque de verre, qui indiquent le tracé des cordons (20).
